# DEMANDE DE BREVET EUROPEEN

(11) **EP 0 785 107 A1**
(43) Date de publication de la demande: **23.07.1997**
(21) Numéro de dépôt: 96402713.0
(22) Date de dépôt: 12.12.1996
(51) Int. Cl.: B60R 21/20, B60R 16/02, B60R 21/05

(54) **Volant de direction et module de sécurité en faisant partie**

(30) Priorité: 22.01.1996 FR 9600663
(71) Demandeur: GERSTEEN exerçant ses activités sous la dénomination ISODELTA, F-86190 Vouille (FR)
(72) Inventeur: Geron, Jean, 86000 Poitiers (FR)
(74) Mandataire: Rinuy, Santarelli

(57) **Abrégé**

Le module (5) de sécurité contre les chocs que comporte le volant, est pourvu d'oreilles (32) de fixation faisant saillie latéralement, chaque oreille étant assujettie à l'une des branches (4) du volant, ce qui permet de faire coopérer le module (5) et l'armature du volant d'une façon particulièrement simple, commode et économique. Chaque oreille (32) de fixation peut être montée de façon mobile vis-à-vis de la branche (4) du volant correspondente et comporter une tête (34) de contact électrique en regard d'une tête (37) de contact électrique de la branche (4), le déplacement du module (5) à l'encontre de moyens élastiques (36) permettant d'actionner un accessoire du véhicule tel qu'un avertisseur sonore.

## Description

L'invention a trait aux volants de direction pour véhicule qui comportent un module de sécurité contre les chocs disposé dans un espace central situé du côté du conducteur.

On sait qu'un tel module, par exemple du type air-bag ou choc-tête, doit être fixé à l'armature du volant afin d'être maintenu en place, y compris lors d'un choc, et que les mesures prises pour faire coopérer l'armature du volant et le module de sécurité sur le plan mécanique, sont dans certains cas complexes et onéreuses.

En particulier, lorsque le module de sécurité doit être monté mobile à l'encontre de moyens de rappel élastiques pour jouer la fonction d'un poussoir de commande électrique d'un accessoire tel que l'avertisseur sonore, le module est fixé à l'armature par l'intermédiaire d'une ou plusieurs plaque(s) d'adaptation qui est (sont) fixée(s) rigidement au module de sécurité par vissage sur des points de fixation prévus sur le dessous du module et qui est (sont) montée(s) sur l'armature à coulissement suivant une direction parallèle à l'axe du volant, avec des ressorts de compression disposés entre l'armature et la ou les plaque(s).

L'invention vise à améliorer la fiabilité de la fonction de commande électrique offerte par ce type de volant, et plus généralement, y compris dans le cas où le module est monté rigidement sur l'armature, à permettre de faire coopérer ces derniers sur le plan mécanique, d'une façon qui soit simple, commode et économique.

A cet effet, l'invention propose un volant caractérisé en ce que ledit module de sécurité est pourvu d'oreilles de fixation faisant saillie latéralement, et en ce que chaque oreille est assujettie à l'une des branches du volant.

Ainsi, contrairement aux modules de sécurité des volants classiques, qui se fixent par le dessous, le module de sécurité du volant selon l'invention se fixe grâce à des oreilles latérales qui sont en porte-à-faux, les points de fixation que comporte l'armature du volant au niveau de ses branches étant plus hauts, et plus éloignés de l'axe du volant.

Grâce à cette localisation des points de fixation, la coopération mécanique entre l'armature du volant et le module de sécurité s'effectue périphériquement autour du corps de ce dernier, ce qui permet une mise en oeuvre particulièrement aisée.

En particulier, on évite les difficultés d'implantation que l'on rencontrait dans les volants antérieurs du fait que cette coopération s'effectuait dans une zone où une place importante doit être laissée libre pour permettre la mise en place de la vis ou de l'écrou qui permet de retenir le moyeu du volant sur la colonne de direction.

Selon des caractéristiques préférées, ledit module de sécurité comporte une dite oreille de fixation pour chaque branche du volant.

La coopération entre le module de sécurité et l'armature du volant s'effectue ainsi à chaque emplacement où elle est possible, ce qui offre un certain nombre d'avantages, notamment sur le plan de la tenue mécanique, et sur le plan de la sensibilité lorsque le module de sécurité joue le rôle d'un poussoir de commande d'un accessoire électrique, le fait de maximiser le nombre d'emplacements où un contact électrique peut s'effectuer (un emplacement par branche) permettant d'obtenir un tel contact avec un déplacement relativement modéré du module de sécurité.

Selon un mode de réalisation préféré du volant selon l'invention, permettant de donner aisément au module de sécurité une telle fonction de poussoir :
- au moins une dite oreille dudit module comporte une tête de contact électrique ;
- chaque branche à laquelle est assujettie une telle oreille comporte une tête de contact électrique en regard de celle de cette oreille, et porte des moyens pour assujettir cette oreille qui sont adaptés à ce que cette oreille soit mobile vis-à-vis de cette branche suivant une direction parallèle à l'axe du volant, entre une position de repos où la tête de contact de cette oreille et celle de cette branche sont à l'écart l'une de l'autre, et une position de travail où elles sont l'une contre l'autre ;
- des moyens élastiques sont prévus pour solliciter chaque telle oreille vers la position de repos ;
- une paroi sous laquelle se trouve ledit module est prévue pour fermer ledit espace central dans lequel se trouve le module ; et
- ledit module, ladite paroi sous laquelle il se trouve, et lesdits moyens élastiques sont adaptés à coopérer de façon qu'un appui exercé sur cette paroi permette de déplacer le modulé vis-à-vis de la branche à laquelle est assujettie une telle oreille pour que cette oreille se déplace de la position de repos à la position de travail tandis que se déforment les moyens élastiques, et de façon que les moyens élastiques ramènent chaque telle oreille à la position de repos lorsqu'est relâchée ladite paroi.

Selon des caractéristiques préférées de ce mode de réalisation, chaque dite oreille qui comporte une dite tête de contact électrique, porte cette tête au niveau de son extrémité libre.

L'élément de contact électrique se trouve ainsi aussi éloigné que possible de l'axe du volant, ce qui est favorable à la sensibilité de la détection de déplacement du module de sécurité.

Selon d'autres caractéristiques préférées de ce mode de réalisation, également favorables à la sensibilité de la détection, chaque dite oreille dudit module comporte une dite tête de contact électrique.

Selon d'autres caractéristiques préférées de ce mode de réalisation du volant selon l'invention :
- il comporte une armature métallique dont fait partie chaque branche, avec cette armature qui fait partie d'une liaison électrique entre une première borne électrique que comporte le volant et chaque dite tête de contact que comporte une branche du volant ;
- ledit module comporte une embase métallique dont fait partie chaque dite oreille, avec cette embase qui fait partie d'une liaison électrique entre une deuxième borne électrique que comporte le volant et chaque dite tête que comporte une oreille ; et
- chaque branche à laquelle est assujettie une dite oreille, porte des moyens pour assujettir cette oreille qui sont adaptés à isoler électriquement cette oreille de cette branche, de sorte qu'une liaison électrique entre lesdites première et deuxième bornes ne peut s'établir que si une dite oreille comportant une tête de contact est en position de travail, le circuit électrique que comporte le volant entre lesdites première et deuxième bornes étant destiné à servir d'organe de commande d'un accessoire du véhicule tel qu'un avertisseur sonore.

Selon d'autres caractéristiques préférées de ce mode de réalisation, lesdits moyens élastiques pour solliciter vers la position de repos chaque dite oreille qui comporte une tête de contact électrique, comportent pour chaque telle oreille un élément élastique disposé au niveau des moyens pour assujettir cette oreille à une branche.

Le fait de prévoir un tel élément élastique au niveau de chaque moyen d'assujettissement est avantageux sur le plan de la fiabilité, puisqu'il existe ainsi un élément de rappel local à chaque endroit où le module de sécurité peut se déplacer vis-à-vis de l'armature.

Selon d'autres caractéristiques préférées de ce mode de réalisation, avantageusement combinées à celles qui viennent d'être exposées, ladite paroi qui ferme une zone centrale du volant est fixée audit module de sécurité et est monobloc avec l'enrobage de la jante, auquel elle est reliée au niveau de chaque branche par un voile qui fait partie desdits moyens élastiques.

Grâce à ces caractéristiques, le volant selon l'invention peut être obtenu de façon particulièrement aisée, puisque la paroi centrale peut être obtenue dans la même opération de moulage que l'enrobage de la jante, en prenant soin de donner aux voiles les caractéristiques géométriques permettant d'obtenir l'élasticité recherchée.

En outre, dans le cas où un élément élastique est prévu au niveau de chaque oreille de fixation, il peut avoir une élasticité relativement faible, et être par exemple formé par un élément aussi simple qu'une rondelle d'élastomère.

Selon des caractéristiques préférées du volant selon l'invention, pour des raisons de simplicité, de commodité et d'économie :
- chaque branche à laquelle est assujettie une dite oreille, porte des moyens pour assujettir cette oreille qui comportent une vis servant également à réunir deux parties de cette branche ;
- chaque branche à laquelle est assujettie une dite oreille, porte des moyens pour assujettir cette oreille qui comportent une vis qui sert également à fixer une coque arrière que comporte le volant ;
- chaque branche à laquelle est assujettie une dite oreille, porte des moyens pour assujettir cette oreille qui comportent :
   - un fût solidaire de cette branche, passant au travers d'une ouverture de cette oreille, et orienté suivant une direction parallèle à l'axe du volant, la surface de ce fût se raccordant de chaque côté à une surface transversale s'étendant radialement au-delà de celle du fût ; et
   - un élément élastique disposé autour dudit fût entre cette oreille et une dite surface transversale,
- alternativement, chaque branche à laquelle est assujettie une dite oreille, porte des moyens pour assujettir cette oreille qui comportent :
   - un fût solidaire de cette oreille, passant au travers d'une ouverture de cette branche, et orienté suivant une direction parallèle à l'axe du volant, la surface dudit fût se raccordant, du côté opposé à celui où elle se raccorde à cette oreille, à une surface transversale s'étendant radialement au-delà de celle du fût ; et
   - un élément élastique disposé autour dudit fût entre cette oreille et cette branche.

L'invention propose également, sous un deuxième aspect, le module de sécurité contre les chocs qui convient au volant dont on vient de donner les caractéristiques, module qui se caractérise en ce qu'il est pourvu d'oreilles de fixation faisant saillie latéralement.

L'exposé de l'invention sera maintenant poursuivi par la description d'exemples de réalisation, donnée ci-après à titre illustratif et non limitatif, en référence aux dessins annexés, sur lesquels :
- la figure 1 est une demi-vue en élévation-coupe prise dans un volant conforme à l'invention ;
- la figure 2 est un schéma électrique montrant la fonction d'organe de commande d'un avertisseur sonore que joue ce volant ;
- la figure 3 est une vue éclatée montrant certains composants du volant de la figure 1 ;
- la figure 4 est une vue partielle en élévation-coupe prise dans une première variante du volant montré sur les figures 1 à 3 ; et
- la figure 5 est une demi-vue en élévation-coupe prise dans une deuxième variante de ce volant.

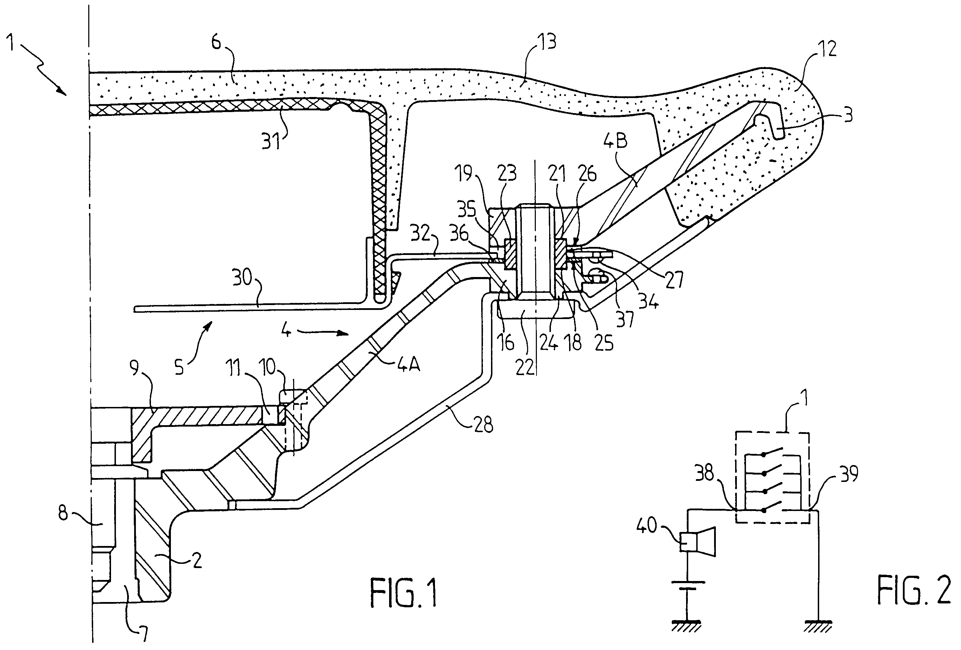

Le volant 1 montré sur les figures 1 à 3 comporte une armature métallique formée par un moyeu 2, par une jante 3 et par quatre branches 4 qui relient le moyeu et la jante, et comporte un module 5 de sécurité contre les chocs, du type air-bag, disposé dans un espace central du volant situé du côté du conducteur, sous une paroi 6 qui ferme cet espace.

Le moyeu 2 présente un alésage 7 prévu pour s'engager sur le bout d'une colonne de direction de type classique, une vis 8 dont la tige filetée est adaptée à coopérer avec le taraudage de cette colonne de direction afin de retenir le moyeu sur la colonne, étant maintenue en place par une roue 9 montée à rotation sur l'armature coaxialement à celle-ci, grâce à des vis 10 portées chacune par un plot se trouvant au niveau de chaque jonction entre le moyeu et l'une des branches, la roue 9 présentant en périphérie des empreintes d'engrènement 11 avec un moyen rotatif d'entraînement (non représenté) grâce auquel on peut faire tourner la vis 8 dans un sens ou dans l'autre pour monter ou démonter le volant, ainsi qu'enseigné dans les demandes de brevet français 96-00079 et 96-00256, auxquelles on pourra se référer pour de plus amples détails.

La jante 3 est entièrement recouverte par un enrobage 12 qui se prolonge avec la même épaisseur au niveau de chaque branche, sur une certaine longueur, la paroi 6 étant reliée à l'enrobage 12 de la jante et d'une portion des branches, par un voile 13 ayant à peu près la même épaisseur que la paroi 6, l'enrobage 12, le voile 13 et la paroi 6 étant obtenus dans une même opération de moulage d'une mousse de matière plastique.

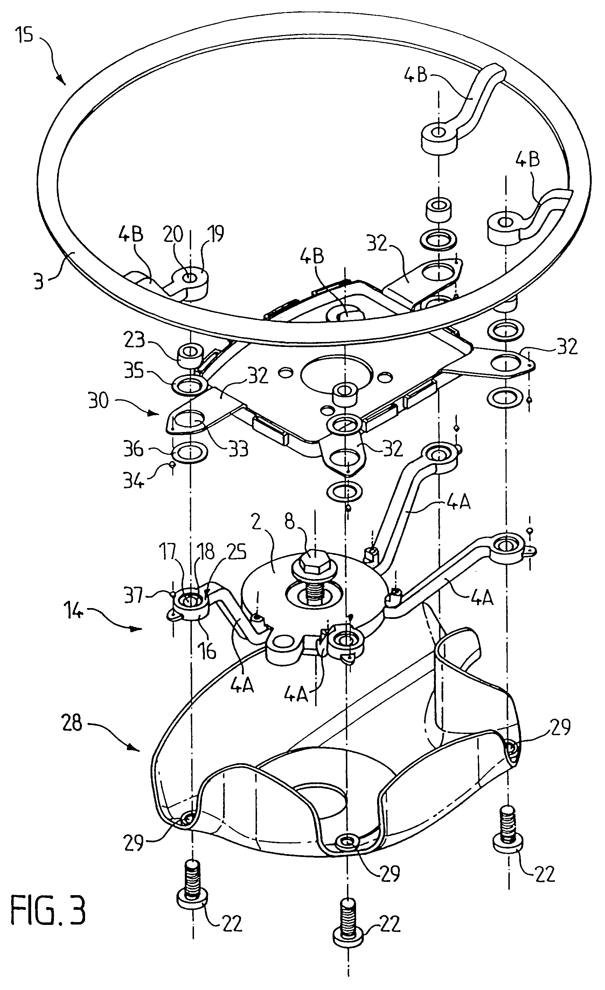

Comme on le voit plus particulièrement sur la figure 3, l'armature du volant 1 est formée en deux parties, respectivement une partie inférieure 14 qui comprend le moyeu 2 et un tronçon inférieur 4A de chacune des branches, et une partie supérieure 15 comportant la jante 3 et un tronçon supérieur 4B de chacune des branches.

Chacun des tronçons 4A comporte à son extrémité libre un oeil 16 de raccordement au tronçon 4B correspondant, chaque oeil 16 étant de forme générale annulaire et présentant un trou lisse 17 orienté suivant un axe parallèle à celui du moyeu, et présentant du côté qui regarde vers le haut, un lamage 18 coaxial au trou 17.

Chaque tronçon 4B comporte à son extrémité libre un oeil 19 similaire à l'oeil 16, mais avec un trou 20 qui est taraudé et avec un lamage 21 ménagé du côté qui regarde vers le bas.

L'assemblage de chaque tronçon 4A avec le tronçon 4B correspondant s'effectue grâce à une vis 22 et à une entretoise rigide 23 faite d'un petit bout de tube métallique dont le diamètre extérieur correspond à celui des lamages 18 et 21, dont le diamètre intérieur correspond à celui de la tige de la vis 22, et dont la longueur est supérieure à la somme de la profondeur du lamage 18 et de la profondeur du lamage 21.

A l'état assemblé (figure 1), l'entretoise 23 est disposée entre les yeux 16 et 19 en étant engagée dans les lamages 18 et 21 de sorte que le trou 17 de l'oeil 16, l'alésage de l'entretoise 23 et le trou 20 de l'oeil 19 sont dans le prolongement l'un de l'autre, la tige de la vis 22 étant reçue dans ces trous et alésage successifs avec son filetage qui est en prise sur le taraudage du trou 20, l'entretoise 23 étant enserrée fortement entre les yeux 16 et 19 grâce au serrage de la vis 22 dont la tête prend appui sur la collerette 24 que comporte l'oeil 16 en saillie du côté qui regarde vers le bas.

On observera qu'une fois les tronçons 4A et 4B réunis, la surface supérieure 25 de l'oeil 16, la surface inférieure 26 de l'oeil 19 et la surface latérale 27 de l'entretoise 23 délimitent un espace annulaire de dimensions prédéterminées, dont l'utilité sera expliquée plus loin.

Les vis 22, en outre de leur fonction d'organe d'assemblage permettant de réunir les tronçons 4A et 4B, servent également à fixer une coque arrière 28 en matière plastique que comporte le volant 1, la coque 28 comportant à cet effet des trous 29 dont le diamètre correspond au diamètre extérieur de la collerette 24, avec la matière bordant les trous 29 qui est prise en sandwich entre la tête de la vis 22 et la surface inférieure de l'oeil 16 qui borde la collerette 24, la coque 28 s'étendant d'une façon générale entre le moyeu 2 et l'enrobage 12 contre chacun desquels elle porte en venant se loger dans une rainure prévue à cet effet.

Le module air-bag 5 comporte une embase métallique 30 à laquelle est accroché un couvercle en matière plastique 31 relativement rigide, l'ensemble formé par l'embase 30 et le couvercle 31 constituant un corps fermé à l'intérieur duquel se trouvent les composants classiques (non représentés), et notamment le générateur de gaz et le sac gonflable.

L'embase 30 comporte pour chaque branche 4 du volant, une oreille de fixation 32 faisant saillie latéralement, c'est-à-dire s'étendant transversalement en porte-à-faux à partir de la paroi latérale du corps du module 5.

Chaque oreille 32 présente une ouverture 33 dont le diamètre est plus grand que le diamètre extérieur de l'entretoise 23 et plus petit que le diamètre extérieur des yeux 16 et 19, avec un écart par rapport à chacun de ces deux diamètres qui est à peu près le même. Un rivet à tête 34 de contact élêctrique est monté à l'extrémité de chaque oreille 32.

A l'état assemblé du volant (figure 1), chaque oreille 32 du module 5 est assujettie à la branche 4 correspondante du volant, du fait qu'elle entoure l'entretoise 23, qui passe à travers l'ouverture 33, et du fait qu'elle est prise en sandwich entre les yeux 16 et 19, une rondelle 35 à profil en L étant interposée entre l'oreille 32 et l'oeil 19 d'une part et l'entretoise 23 d'autre part, une rondelle plate 36 étant quant à elle interposée entre l'oeil 16 et l'oreille 32 d'une part et la rondelle 35 d'autre part.

La rondelle 35 est faite dans une matière plastique relativement rigide tandis que la rondelle 36 est faite dans une matière plastique élastique, par exemple un élastomère de silicone ou de néoprène.

On voit que l'écrasement de la rondelle 36 permet de faire coulisser l'oreille 32 vis-à-vis de l'entretoise 23 dans le sens de l'enfoncement à partir de la position de repos illustrée sur la figure 1, et que la reprise de volume de la rondelle 36 lorsque cesse d'être exercé l'effort qui a provoqué son écrasement, ramène l'oreille 32 à sa position initiale.

Chaque oeil 16 porte au niveau de son extrémité libre un rivet à tête de contact 37 similaire à la tête 34 et disposé en regard de celle-ci, les têtes 34 et 37 venant l'une contre l'autre dans une position de travail qu'atteint l'oreille 32 à partir de la position de repos illustrée, en écrasant la rondelle 36.

Les rondelles 35 et 36 sont faites dans une matière plastique isolante sur le plan électrique, de sorte que chaque oreille 32 est isolée sur le plan électrique de la branche 4 à laquelle elle est assujettie.

L'embase métallique 30 fait partie d'une liaison électrique entre une borne 38 (figure 2) du volant 1 et la tête 34 que comporte chaque oreille 32, et de même l'armature du volant fait partie d'une liaison électrique entre une borne 39 et la tête 37 que porte chaque oeil 16, le circuit électrique que comporte le volant 1 entre les bornes 38 et 39 étant ouvert lorsque toutes les oreilles 32 sont en position de repos, chacune des têtes 34 étant à l'écart de la tête 37 correspondante, ce circuit se fermant dès lors qu'au moins l'une des oreilles 32 est en position de travail (têtes 34 et 37 l'une contre l'autre).

La liaison électrique qui s'établit ainsi entre les bornes 38 et 39 du volant 1 sert, comme on le voit sur la figure 2, à commander l'avertisseur sonore 40 du véhicule.

L'ensemble monobloc formé par l'enrobage 12, les voiles 13 et la paroi 6 est surmoulé d'une part sur la jante 3 et sur une partie des tronçons de branches 4B, et d'autre part sur le couvercle 31 auquel il est solidarisé intimement du fait de ce surmoulage.

Lorsqu'il désire actionner l'avertisseur 40, le conducteur du véhicule qui a en mains le volant 1 exerce une pression sur la paroi 6, et du fait de cette pression les voiles 13 et les rondelles 36 se déforment, ce qui permet le déplacement du module 5 grâce auquel au moins l'une des oreilles 32 se déplace suffisamment pour que la tête 34 qu'elle porte viennent au contact de la tête 37 correspondante.

Lorsque le conducteur relâche la paroi 6, les moyens élastiques constitués par les rondelles 36 et par les voiles 13 ramènent le module 5 en position initiale où chacune des oreilles 32 est dans la position de repos illustrée.

On notera que le voile 13 illustré a une conformation qui a été déterminée en vue d'optimiser la fonction de moyen de rappel élastique qu'il joue.

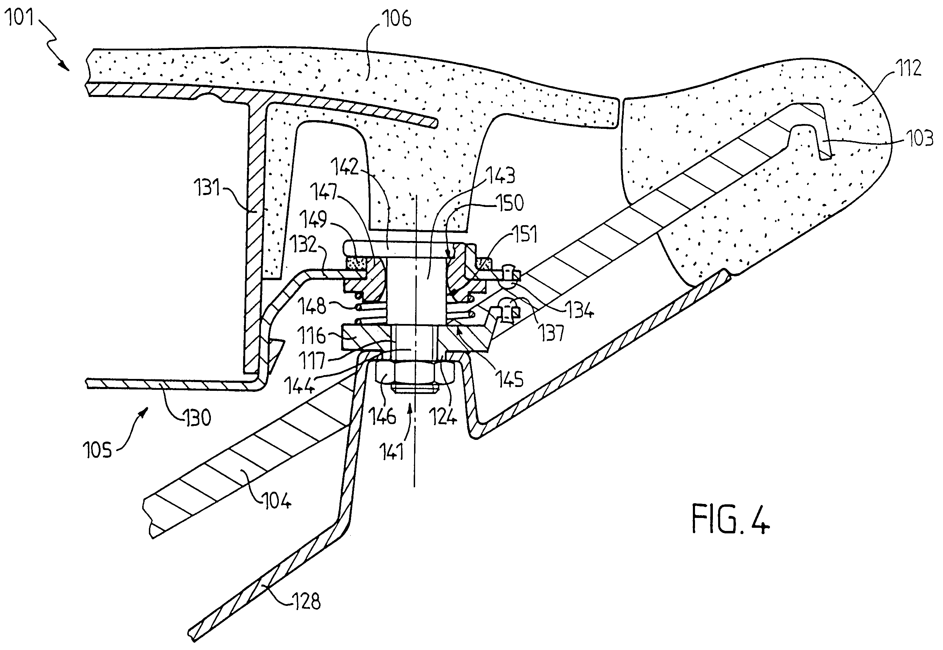

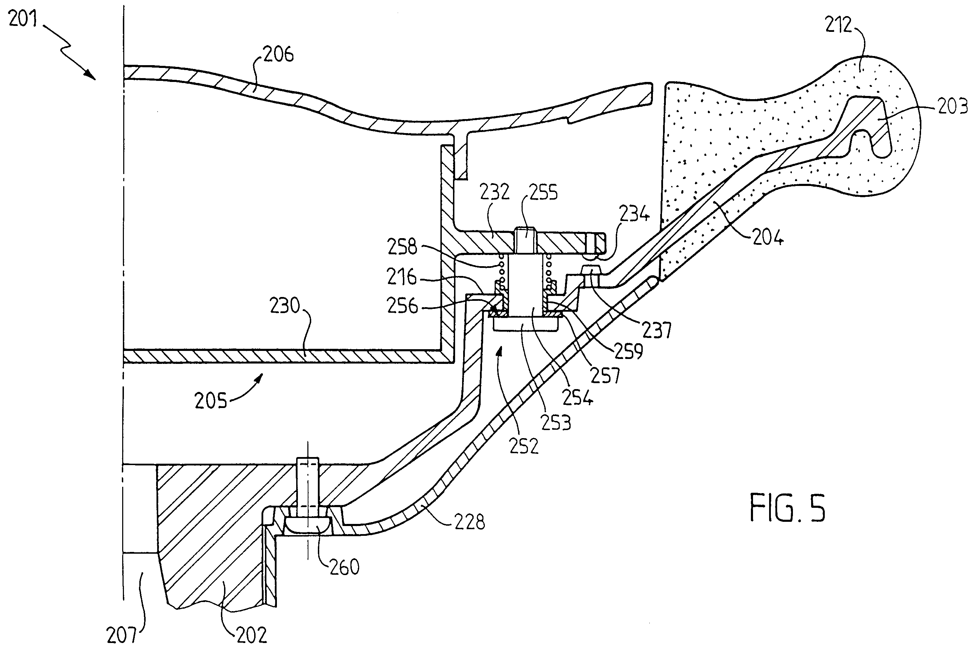

Pour les variantes 101 et 201 du volant 1 montrées respectivement sur la figure 4 et sur la figure 5, les références numériques du volant 1, additionnées respectivement du chiffre 100 ou du chiffre 200, désignent des éléments identiques ou similaires.

Le volant 101 montré sur la figure 4 se distingue du volant 1 essentiellement par le fait que son armature est monobloc (les branches 104 ne sont pas en deux tronçons), et par le fait que la paroi 106 n'est pas reliée à l'enrobage 112, de sorte que les moyens que porte chaque bras 104 pour assujettir l'oreille 132 correspondante, comprennent des moyens élastiques plus puissants que la rondelle 36 du volant 1.

L'oreille 116 que comporte chaque branche 104 ne comporte pas de lamage tel que le lamage 18 du volant 1, et coopère en fait avec un boulon dont la vis 141 comporte une tête plate 142 et une tige comportant une portion lisse 143 et une portion filetée 144, la portion 143 s'étendant entre la tête 142 et la portion filetée 144 qui s'étend elle-même entre la portion 143 et l'extrémité libre de la vis, le diamètre de la portion 143 étant supérieur à celui de la portion 144 de sorte qu'il existe un épaulement à leur jonction, cet épaulement prenant appui sur la face supérieure 145 de l'oeil 116, la portion filetée 144 passant au travers du trou lisse 117 de l'oeil 116, celui-ci étant enserré entre l'épaulement qui porte sur sa surface supérieure 145 et l'écrou 146 qui porte sur la face inférieure de la collerette 124.

Une rondelle 147 à profil en T, faite en matière plastique rigide et isolante sur le plan électrique, et un ressort spiral de compression 148 sont disposés autour de la portion de vis 143, avec le ressort 148 qui est disposé entre l'oeil 146 et la rondelle 147, le ressort 148 portant plus précisément sur la surface supérieure 145 de l'oeil 116 tandis qu'il est engagé autour d'une collerette que présente la face inférieure de la rondelle 147.

L'oreille 132 est disposée autour de la rondelle 147, en étant prise en sandwich entre l'aile de la rondelle 147 et une rondelle plate 149, faite dans une matière plastique rigide et isolante sur le plan électrique, le ressort 148 sollicitant l'ensemble formé par la rondelle 147, l'oreille 132 et la rondelle 149 vers la tête de vis 142, les surfaces supérieures des rondelles 147 et 149 portant contre la surface inférieure de la tête 142 dans la position de repos illustrée, la compression du ressort 148 à l'occasion d'une pression exercée sur la paroi 106 permettant d'amener l'oreille 132 dans la position de travail où les têtes 134 et 137 sont en contact.

On observera que l'entretoise 23 et la portion de vis 143 constituent toutes deux un fût solidaire de la branche à laquelle est assujettie l'oreille 32 ou 132, fût qui passe au travers de l'ouverture de cette oreille, et qui est orienté suivant une direction parallèle à l'axe du volant, avec la surface 27 ou 151 de ce fût qui se raccorde de chaque côté à une surface transversale, 25 ou 145 d'un côté, et 26 ou 150 de l'autre côté, s'étendant radialement au-delà de la surface du fût ; et que la rondelle 36 ou le ressort 148 constituent tous deux un élément élastique de compression disposé entre celle des surfaces transversales qui est la plus basse et l'oreille 32 ou 132, qui est mobile entre les deux surfaces transversales.

Dans une variante non illustrée, l'élément élastique de compression tel que la rondelle 36 ou le ressort 148, est remplacé par un élément élastique de traction disposé entre l'oreille et celle des surfaces transversales qui est la plus haute.

Le volant 201 montré sur la figure 5 comporte vis-à-vis du volant 1 les mêmes différences que le volant 101, et en outre le fût que comportent les moyens d'assujettissement des oreilles respectives 232 sur la branche correspondante, est solidaire de l'oreille, et non de la branche, de sorte que l'on ne peut utiliser la vis faisant partie de ces moyens d'assujettissement pour la fixation de la coque arrière 228, des vis séparées 260 étant prévues.

La vis 252 qui sert à assujettir une oreille 232 respective du module 205 à la branche 204 correspondante, comporte une tête 253 et une tige comportant une portion lisse 254 et une portion filetée 255, la portion 254 s étendant entre la tête 253 et la portion 255, cette dernière s'étendant entre la portion 254 et l'extrémité libre, la portion 254 ayant un plus grand diamètre que la portion 255, de sorte qu'il existe un épaulement à la jonction entre ces deux portions.

L'ouverture de l'oreille 232 est taraudée et de même diamètre que la portion de vis 255, ce grâce à quoi la vis 252 est solidarisée à l'oreille 232, avec l'épaulement entre les portions 254 et 255 qui vient en appui sur la surface inférieure de l'oreille 232.

La portion 254 passe quant à elle à travers le trou lisse de l'oeil 216, la surface annulaire 256 de la tête 253 étant en regard de la face inférieure de l'oeil 216, une rondelle plate 257 en matière plastique rigide et isolante sur le plan électrique étant interposée entre ces deux surfaces.

Un ressort spiral de compression 258 disposé entre la face supérieure de l'oeil 216 et la face inférieure de l'oreille 232 sert d'élément élastique, une douille 259 en matière plastique rigide et isolante sur le plan électrique étant prévue entre l'oeil 216 et la portion 254 d'une part et le ressort 258 d'autre part.

Le volant 201 se distingue également des volants 1 et 101 par le fait que la paroi latérale de l'embase 230 du module 205 remonte beaucoup plus haut que l'oreille 232, avec la paroi 206 qui est directement fixée au sommet de l'embase, sans élément intermédiaire tel que le couvercle 31 ou 131.

Dans des variantes non illustrées du volant selon l'invention, on utilise à la place de l'un ou l'autre des ressorts une rondelle plate telle que la rondelle 36, ou alors on utilise un ressort à la place de cette rondelle ; on prévoit d'autres types de moyens pour assujettir les oreilles respectives aux branches correspondantes de façon que chaque oreille soit mobile suivant une direction parallèle à l'axe du volant ; on prévoit une oreille pour seulement certaines branches du volant et non pour chaque branche ; on dispose une tête de contact sur seulement certaines oreilles, et non sur chaque oreille ; on commande un accessoire électrique autre que l'avertisseur sonore lorsqu'on appuie sur la paroi qui ferme l'espace central du volant ; on remplace le module air-bag par un autre type de module de sécurité contre les chocs ; ou on assujettit chaque oreille de manière rigide à l'armature du volant, en prévoyant de commander différemment l'accessoire électrique du véhicule.

On rappelle que l'invention ne se limite pas aux exemples décrits et représentés.

## Revendications

1. Volant de direction pour véhicule comportant, dans un espace situé du côté du conducteur, un module de sécurité contre les chocs ; caractérisé en ce que ledit module de sécurité (5 ; 105 ; 205) est pourvu d'oreilles de fixation (32 ; 132 ; 232) faisant saillie latéralement, et en ce que chaque oreille est assujettie à l'une des branches (4 ; 104 ; 204) du volant.

2. Volant selon la revendication 1, caractérisé en ce que ledit module de sécurité (5 ; 105 ; 205) comporte une dite oreille de fixation pour chaque branche du volant.

3. Volant selon l'une quelconque des revendications 1 ou 2, caractérisé en ce que :
- au moins une dite oreille dudit module comporte une tête (34 ; 134 ; 234) de contact électrique ;
- chaque branche (4 ; 104 ; 204) à laquelle est assujettie une telle oreille comporte une tête (37 ; 137 ; 237) de contact électrique en regard de celle de cette oreille, et porte des moyens (22, 23, 35, 36 ; 141, 146-149 ; 252, 256-259) pour assujettir cette oreille qui sont adaptés à ce que cette oreille soit mobile vis-à-vis de cette branche suivant une direction parallèle à l'axe du volant, entre une position de repos où la tête (34 ; 134 ; 234) de contact de cette oreille et celle (37 ; 137 ; 237) de cette branche sont à l'écart l'une de l'autre, et une position de travail où elles sont l'une contre l'autre ;
- des moyens élastiques (13, 36 ; 148 ; 258) sont prévus pour solliciter chaque telle oreille vers la position de repos ;
- une paroi (6 ; 106 ; 206) sous laquelle se trouve ledit module (5 ; 105 ; 205) est prévue pour fermer ledit espace central dans lequel se trouve le module ; et
- ledit module, ladite paroi sous laquelle il se trouve, et lesdits moyens élastiques sont adaptés à coopérer de façon qu'un appui exercé sur cette paroi (6 ; 106 ; 206) permette de déplacer le module vis-à-vis de la branche à laquelle est assujettie une telle oreille pour que cette oreille se déplace de la position de repos à la position de travail tandis que se déforment les moyens élastiques, et de façon que les moyens élastiques ramènent chaque telle oreille à la position de repos lorsqu'est relâchée ladite paroi.

4. Volant selon la revendication 3, caractérisé en ce que chaque dite oreille qui comporte une dite tête (34 ; 134 ; 234) de contact électrique, porte cette tête au niveau de son extrémité libre.

5. Volant selon l'une quelconque des revendications 3 ou 4, caractérisé en ce que chaque dite oreille dudit module comporte une dite tête (34 ; 134 ; 234) de contact électrique.

6. Volant selon l'une quelconque des revendications 3 à 5, caractérisé en ce que :
- il comporte une armature métallique (2-4 ; 104, 103 ; 202-204) dont fait partie chaque branche (4 ; 104 ; 204), avec cette armature qui fait partie d'une liaison électrique entre une première borne électrique (39) que comporte le volant et chaque dite tête de contact (37 ; 137 ; 237) que comporte une branche du volant ;
- ledit module (5 ; 105 ; 205) comporte une embase métallique (30 ; 130 ; 230) dont fait partie chaque dite oreille (32 ; 132 ; 232), avec cette embase qui fait partie d'une liaison électrique entre une deuxième borne électrique (38) que comporte le volant et chaque dite tête (34 ; 134 ; 234) que comporte une oreille ; et
- chaque branche à laquelle est assujettie une dite oreille, porte des moyens (22, 23, 35, 36 ; 141, 146-149 ; 252, 256-259) pour assujettir cette oreille qui sont adaptés à isoler électriquement cette oreille de cette branche, de sorte qu'une liaison électrique entre lesdites première et deuxième bornes (39, 38) ne peut s'établir que si une dite oreille comportant une tête de contact est en position de travail, le circuit électrique que comporte le volant entre lesdites première et deuxième bornes étant destiné à servir d'organe de commande d'un accessoire du véhicule tel qu'un avertisseur sonore (40).

7. Volant selon l'une quelconque des revendications 3 à 6, caractérisé en ce que lesdits moyens élastiques pour solliciter vers la position de repos chaque dite oreille qui comporte une tête de contact électrique, comportent pour chaque telle oreille un élément élastique (36 ; 148 ; 258) disposé au niveau des moyens pour assujettir cette oreille à une branche.

8. Volant selon l'une quelconque des revendications 3 à 7, caractérisé en ce que ladite paroi (6) qui ferme une zone centrale du volant est fixée audit module de sécurité (5) et est monobloc avec l'enrobage (12) de la jante, auquel elle est reliée au niveau de chaque branche (4) par un voile (13) qui fait partie desdits moyens élastiques.

9. Volant selon l'une quelconque des revendications 1 à 8, caractérisé en ce que chaque branche (4) à laquelle est assujettie une dite oreille (32), porte des moyens pour assujettir cette oreille qui comportent une vis (22) servant également à réunir deux parties (4A, 4B) de cette branche.

10. Volant selon l'une quelconque des revendications 1 à 9, caractérisé en ce que chaque branche (4 ; 104) à laquelle est assujettie une dite oreille, porte des moyens pour assujettir cette oreille qui comportent une vis (22 ; 141) qui sert également à fixer une coque arrière (28 ; 128) que comporte le volant.

11. Volant selon l'une quelconque des revendications 1 à 10, caractérisé en ce que chaque branche (4 ; 104) à laquelle est assujettie une dite oreille, porte des moyens pour assujettir cette oreille qui comportent :
- un fût (23 ; 143) solidaire de cette branche, passant au travers d'une ouverture de cette oreille (32 ; 132), et orienté suivant une direction parallèle à l'axe du volant, la surface (27 ; 151) de ce fût se raccordant de chaque côté à une surface transversale (25, 26 ; 145, 150) s'étendant radialement au-delà de celle du fût ; et
- un élément élastique (36 ; 148) disposé autour dudit fût entre cette oreille et une dite surface transversale (25 ; 145).

12. Volant selon l'une quelconque des revendications 1 à 8, caractérisé en ce que chaque branche (204) à laquelle est assujettie une dite oreille (232), porte des moyens pour assujettir cette oreille qui comportent :
- un fût (254) solidaire de cette oreille, passant au travers d'une ouverture de cette branche, et orienté suivant une direction parallèle à l'axe du volant, la surface dudit fût se raccordant, du côté opposé à celui où elle se raccorde à cette oreille (232), à une surface transversale (256) s'étendant radialement au-delà de celle du fût ; et
- un élément élastique (258) disposé autour dudit fût entre cette oreille et cette branche.

13. Volant selon l'une quelconque des revendications 11 ou 12, caractérisé en ce que ledit élément élastique est une rondelle (36) en matière plastique.

14. Volant selon l'une quelconque des revendications 11 ou 12, caractérisé en ce que ledit élément élastique est un ressort spiral de compression (148 ; 258).

15. Module de sécurité contre les chocs convenant à un volant selon l'une quelconque des revendications 1 à 14, caractérisé en ce qu'il est pourvu d'oreilles (32 ; 132 ; 232) de fixation faisant saillie latéralement.
